(19) **Europäisches Patentamt**

**European Patent Office**

**Office européen des brevets**

(11) **EP 0 694 934 B1**

(12) **EUROPÄISCHE PATENTSCHRIFT**

(45) Veröffentlichungstag und Bekanntmachung des Hinweises auf die Patenterteilung:
**05.11.2003   Patentblatt 2003/45**

(51) Int Cl.7: **H01G 4/00**, H01G 4/008

(21) Anmeldenummer: **95109336.8**

(22) Anmeldetag: **16.06.1995**

(54) **Edelmetallhaltige Resinatpaste zur Herstellung von keramischen Vielschichtkondensatoren**

Precious metal-containing resinous paste for manufacturing ceramic multilayer capacitors

Pâte résineuse contenant des métaux nobles pour la fabrication de condensateurs multicouches céramiques

(84) Benannte Vertragsstaaten:
**AT DE FR GB NL**

(30) Priorität: **21.07.1994   DE 4425815**

(43) Veröffentlichungstag der Anmeldung:
**31.01.1996   Patentblatt 1996/05**

(73) Patentinhaber: Ferro GmbH
**60327 Frankfurt (DE)**

(72) Erfinder:
* **Starz, Karl-Anton, Dr. (Dipl.-Chem.)**
  **D-63517 Rodenbach (DE)**
* **Lutz, Klaus, Dr., (Dipl.-Chem.)**
  **D-63517 Rodenbach (DE)**
* **Peter, Willi, Dipl.-Ing.**
  **D-63825 Blankenbach (DE)**
* **Bänisch, Volker**
  **D-63526 Erlensee (DE)**
* **Fembs, Dieter W.R., Dr. Dipl.-Chem.**
  **D-63457 Hanau (DE)**

(74) Vertreter: **Reinhardt, Markus, Dipl.-Ing. et al**
**Reinhardt Söllner Ganahl,**
**Patentanwälte,**
**P.O. Box 1226**
**85542 Kirchheim bei München (DE)**

(56) Entgegenhaltungen:
**EP-A- 0 410 406          DE-A- 2 035 945**

## Beschreibung

Die Erfindung betrifft eine edelmetallhaltige Resinatpaste zur Herstellung von Innenelektroden für keramische Vielschichtkondensatoren, bestehend aus 10 bis 80 Gew.% Edelmetallresinaten, 1 bis 30 Gew.% Unedelmetallresinaten, 0 bis 30 Gew.% organischen Bindemitteln und 0 bis 30 Gew.% organischen Lösungsmitteln.

Keramikvielschichtkondensatoren sind wichtige passive Bauelemente, die in der Elektronikfertigung in großem Umfang, vor allem zur Entkoppelung von IC-Baugruppen eingesetzt werden. Ihr Bedarf wächst analog dem Verbrauch an integrierten Schaltkreisen ständig. Ihre Einsatzgebiete liegen in der Unterhaltungselektronik, bei der Datenverarbeitung, in der Kommunikationstechnik und besonders in der KFZ-Elektronik.

Keramikvielschichtkondensatoren bieten gegenüber anderen Kondensatortypen den Vorteil hoher Kapazität pro Volumeneinheit. Zu ihrer Herstellung brennt man abwechselnd Schichten aus einem keramischen Dielektrikum (z. B. $BaTiO_3$, $CaTiO_3$ mit Zusätzen) und aus Edelmetallen, meist Palladium oder Palladiumlegierungen, bei Temperaturen um 1300° an Luft zusammen. Die Herstellung von Vielschichtkondensatoren ist beispielsweise in einem Aufsatz von Donald M. Trotter in "Spektrum der Wissenschaft", September 1988, S. 88 ff" beschrieben. Es gibt im Prinzip zwei verschiedene Methoden, Keramikvielschichtkondensatoren zu fertigen: den Trockenprozess ("Dry stack" oder "Tape"-Prozess) sowie den Naßprozeß ("Wet-stack"-Prozess). Im Trockenprozess bildet eine Folie aus grüner Keramik ("Tape") die Grundlage. Sie wird im Siebdruckverfahren mit einer Palladium- oder Silberpalladiumpaste als Elektrodenmaterial beschichtet in mehreren Schichten übereinander gestapelt und an Luft eingebrannt.

Beim Naßprozeß findet nicht eine Keramikfolie Verwendung, sondern die dielektrische Keramik wird in Form einer Paste im Siebdruckverfahren auf eine Platte gedruckt. Sobald die Keramikpaste getrocknet ist, wird darauf die Elektrodenpaste (Pd oder Ag/Pd) aufgebracht. Dann folgt eine weitere Schicht Keramik, auf die wiederum Elektrodenpaste gedruckt wird. Dieser Vorgang wiederholt sich so lange, bis die gewünschte Zahl an Schichten erreicht ist. Abschließend wird auch hier an Luft eingebrannt.

Diese Herstellverfahren für keramische Vielschichtkondensatoren weisen einige Nachteile auf. So ist ihre Herstellung teuer, da für die Innenelektroden teure Edelmetalle in Pulverform verwendet werden. Eine Einsparmöglichkeit besteht darin, das teure Palladium durch Silber zu ersetzen. Bei modernen Vielschichtkondensatoren werden in der Regel AgPd 70/30 - oder AgPd 80/20-Pulver verwendet, wobei die Brenntemperaturen bei 1100 bis 1150° C liegen. Entscheidend ist aber, daß diese Pulver eine hohe Feinheit aufweisen müssen (typischerweise <1 μm), keine Agglomerate bilden dürfen und in organischen Bindemitteln leicht dispergierbar sein müssen, damit siebdruckfähige Pasten daraus hergestellt werden können. Die Herstellung solche Edelmetall-Pulver ist aufwendig und teuer. Auch die Verfahren zur Herstellung der für den Siebdruckprozess geeigneten Pulverpasten sind aufwendig und zeitraubend. Im wesentlichen handelt es sich hier um komplexe Dispergierverfahren, die im Verbund mit Verfahren zur Abtrennung von groben Partikeln eingesetzt werden.

Ein weiterer Nachteil der herkömmlichen Herstellverfahren für keramische Vielschichtkondensatoren ergibt sich aus der Forderung nach zunehmender Miniaturisierung der elektronischen Bauelemente. So werden die Gehäusegrößen für Vielschichtkondensatoren immer kleiner, gleichzeitig werden aber höhere Kapazitäten benötigt. Zur Erhöhung der Volumenkapazität wird deshalb eine Verringerung der Dielektrikumsdicke sowie auch der Elektrodendicke angestrebt. Stand der Technik sind Keramikschichtdicken von ca. 20 μm und Elektrodendicken von ca. 2 μm. Bei etwa 1 μm Elektrodendicke sind die herkömmlichen Pulverpastensysteme jedoch an einer Grenze angekommen, so daß alternative Verfahren notwendig sind, um diese dünnen Elektrodenschichten zu erhalten.

Zur Erzeugung dünner Innenelektroden bei Vielschichtkondensatoren sind in neuerer Zeit Dünnschichtverfahren, wie beispielsweise Bedampfen oder Sputtern aus der DE-PS 40 32 181 bekannt geworden. Diese Verfahren haben jedoch den Nachteil, daß sie diskontinuierlich (d.h. im Batchbetrieb) arbeiten und teure Anlagen (Vakuumeinrichtungen, Masken etc.) erfordern.

Edelmetallhaltige Resinatpasten zur Dekoration von Glas, Porzellan und Steingut sind seit langem bekannt. Sie werden als "Glanzgold" oder "Glanzpalladium" bezeichnet. So ist beispielsweise aus der DE-OS 26 41 321 eine Palladium/Silberresinatpaste bekannt, die nach dem Ausbrand auf Porzellan oder Steingut eine Metallschicht bildet und ein goldartiges Aussehen besitzt.

EP-A-0 410 406 offenbart eine edelmetalhaltige Resinatpaste zur Herstellung von Elektroden für Vielschichtkondensatoren.

In den EP-A- 0 183 399 und 0 289 239 werden Palladiumresinatpasten bzw. Silberresinatpasten beschrieben, die zur Kantenmetallisierung bereits gebrannter keramischer Vielschichtkondensatoren eingesetzt werden. Die Palladiumresinatpaste gemäß EP-A- 0 183 399 besteht beispielsweise aus 70 bis 85 Gew.% Edelmetallresinat und 15 bis 30 Gew.% Unedelmetallresinat, und kann mit einem organischen Lösungsmittel verdünnt werden. Diese Pasten werden jedoch nicht für Innenelektroden verwendet, sondern dienen als Grundlage zur Abscheidung von lotfesten Nickelschichten. Für Innenelektroden sind sie nur beschränkt einsetzbar, da die keramischen Grünlinge von diesen Pasten angegriffen werden können.

Es war daher Aufgabe der vorliegenden Erfindung, eine edelmetallhaltige Resinatpaste zur Herstellung von Innenelektroden für keramische Vielschichtkondensatoren zu entwickeln, bestehend aus 10 bis 80 Gew.% Edelmetallresinaten, 1 bis 30 Gew.% Unedelmetallresinaten, 0 bis 30 Gew.% organischen Bindemitteln und 0 bis 30 Gew.% organischen Lösungsmitteln, die die keramischen Grünlinge beim Aufdrucken und Trocknen nicht angreift und nach dem Brennen eine festhaftende, dichte Metallschicht mit einer Stärke auch unterhalb 1 µm bildet.

Diese Aufgabe wird erfindungsgemäß dadurch gelöst, daß die Paste 0,5 bis 20 Gew.% dielektrisches Keramikpulver enthält, wobei das Gewichtsverhältnis Edelmetall:Keramik zwischen 1:1 und 25:1 liegen muß, und die Paste eine Trocknungszeit von weniger als 4 Stunden bei Raumtemperatur aufweist.

Vorzugsweise werden als Edelmetalle Palladium, Silber und Gold in Form von Sulforesinaten, Alkylmercaptiden, Arylmercaptiden, Mercaptocarbonsäureestern oder schwefelfreien Carboxylaten eingesetzt.

Es können aber auch Resinate von Platin, Rhodium, Ruthenium und Iridium verwendet werden.

Als Unedelmetallresinate haben sich schwefelfreie Carboxylate, wie Octanoate, Neodecanoate oder Naphthenate der Elemente Wismut, Zink, Kobalt, Nickel, Chrom, Mangan, Titan, Zirkonium, Zinn, Cer, Silizium, Barium, Bor, Kalzium und Magnesium bewährt. Die beim Brennen sich bildenden Oxide wirken als Haftvermittler zur Keramikunterlage.

Als dielektrisches Keramikpulver verwendet man vorteilhafterweise Bariumtitanat, Strontiumtitanat oder Kalziumtitanat mit modifizierenden Zusätzen. Es können aber auch bleihaltige dielektrische Keramiken, wie Bleititanat, Bleizirkontitanat oder Bleizinkniobat eingesetzt werden. Die Korngröße sollte unter 1 µm liegen.

Es hat sich gezeigt, daß das Trocknungsverhalten der Resinatpasten auf der ungebrannten Keramikfolie bzw. Keramikschicht eine große Rolle spielt. Kommt es zu keiner völligen Durchtrocknung des Resinatpastenfilms auf der Keramik, so führt dies beim späteren Brennen zur Diffusion von Metallatomen in die dielektrische Keramik, so daß keine zusammenhängenden, dichten Metallschichten erhalten werden. Es ist daher wichtig, daß die Edel- und Unedelmetallresinate und die übrigen Bestandteile der Paste so gewählt werden, daß innerhalb von 4 Stunden bei Raumtemperatur ein Trockengrad 1 nach DIN 53150 erreicht wird.

Es hat sich weiterhin gezeigt, daß durch den Zusatz von dielektrischen Keramikpulvern, wie Barium-, Strontiumoder Kalziumtitanat, die Neigung zur Ablösung der durch die Zersetzung der Resinate erzeugten Metallschicht von den keramischen Unterlagen beim Brennen verhindert wird. Diese Delamination tritt vor allem bei dünnen Elektrodenschichten auf, falls die Pasten trotz der Unedelmetallresinate keine Keramikpulver enthalten. Wichtig ist auch das Gewichtsverhältnis Edelmetall/Keramikpulver in der Resinatpaste, das zwischen 1:1 und 25:1 liegen muß. Ist der Keramikanteil zu niedrig, kommt es zu Delaminationen, ist er zu hoch, ist die elektrische Leitfähigkeit der Innenelektroden zu gering.

Je nach den elektrischen Eigenschaften unterscheidet man in der Praxis zwischen COG-, X7R-, Z5U- oder Y5V-Keramik, im wesentlichen Erdalkalititanate mit unterschiedlichen Zusätzen, die den Temperaturkoeffizienten der Kapazität beeinflussen (TCC-Wert). COG-Keramiken weisen einen TCC-Wert von nahezu ± O auf, bestehen in der Regel aus Bariumtitanat, Neodymtitanat und Glasanteilen und werden bei 1200 bis 1300° C eingebrannt. X7R-Keramiken besitzen einen TCC-Wert von ± 15 % und basieren auf Bariumtitanat, Kalziumtitanat, Nioboxid oder Manganoxid sowie Glasanteilen. Der Brenntemperaturbereich beträgt 1100 bis 1200° C. Z5U- und Y5V-Keramiken besitzen ähnliche Zusammensetzungen, weisen jedoch größere TCC-Werte auf. Alle diese Keramiken können in Pulverform (<5 µm) den Resinatpasten zugesetzt werden, wobei es vorteilhaft ist, wenn die Keramik von Unterlage und Resinatzusatz identisch ist.

Als organische Bindemittel kommen die üblichen, in Resinatpasten und Glanzgoldpräparaten verwendeten Harze zum Einsatz. Beispiele sind Ethylzellulose, Acrylatharze, Phenolharze, Kolophonium oder Asphalte.

Als Lösungsmittel werden niedrigsiedende oder höhersiedende Produkte verwendet, wie Toluol, Xylol, Ethylacetat und aliphatische Kohlenwasserstoffe.. Höhersiedende Lösungmittel sind beispielsweise Glykole, Glykolester, Terpene oder Terpenalkohole, wie Terpineol oder Pineöl.

Folgende Beispiele sollen die Erfindung näher erläutern:

1. Es werden die folgenden Komponenten in eine Schale eingewogen und auf einem Dreiwalzwerk dispergiert:

| | |
|---|---|
| 22,0 gr | Goldmercaptocarbonsäureester (43 % Au) |
| 26,0 gr | Palladiumsulforesinat (8,5 % Pd) |
| 2,0 gr | Rhodiumnaphthenat (5 % Rh) |
| 1,0 gr | Wismutresinat (7 % $Bi_2O_3$) |
| 1,5 gr | Chromresinat (3 % $Cr_2O_3$) |
| 1,5 gr | Bariumtitanatpulver (<1 µm) |
| 23,0 gr | Kolophoniumharz |
| 23,0 gr | Terpineol |
| 100,0 gr | |

Der Edelmetallanteil der Resinatpaste beträgt 9,5 % Au, 2,2 % Pd, 0,1 % Rh, der Gesamtedelmetallgehalt ist 11,8 %. Das Verhältnis Edelmetall/Keramik beträgt 7,9:1. Die Viskosität der Resinatpaste liegt bei 15 Pas (HAAKE RV 20, PK1, 0,5°, D=100 sec$^{-1}$, T=20° C). Trocknungszeit: 2,5 Stunden (Trockengrad 1).

In Anlehnung an DIN 53150 wird die Trockungszeit durch Überschichten des getrockneten Resinatpastendrucks auf Keramik mit feinem Seesand und anschließendem Abstreichen mit einem Pinsel bestimmt. Der Trockengrad 1 ist erreicht, wenn sich der Seesand vollständig von der Oberfläche des Resinatfilmes entfernen läßt. Die Zeit hierfür wird angegeben. Die Trocknung erfolgt im Normalklima (23° C, 50 % r.F.).

Die so hergestellte Resinatpaste wird auf eine Folie grüner Keramik des Typs X7R aufgebracht. Als dielektrische Keramik wird Degussa AD 352 L (basierend auf Bariumtitanat) verwendet. Die Abmessungen des Vielschichtkondensators entsprechen denen des Typs 1206. Es werden zwei Elektrodenschichten gedruckt und damit eine aktive Keramiklage erzeugt. Das Auftragen der Resinatpaste auf die grüne Keramik erfolgt im Siebdruckverfahren (400 mesh Edelstahlsieb). Nach dem Trocknen (Raumtemperatur 2,5 Stunden) werden 2 bedruckte Folien versetzt aufeinandergelegt, zwischen jeweils 12 Keramikschichten als Basis und Abdeckung eingelegt und anschließend laminiert (Preßdruck 8 Tonnen, T=50° C, Zeit 2 Minuten). Nach dem Laminieren werden die Teile vereinzelt und in einem mehrstufigen Brennprozeß bei einer Temperatur von 1140° C mit 2,5 Stunden Haltezeit in Zirkonsand gebrannt. Nach dem Einbrand werden die Teile an den Kanten mit AgPd-Paste metallisiert und anschließend Anschlußbeinchen angelötet. Die elektrischen Werte der so hergestellten Kondensatoren sind wie folgt (Mittelwerte):

| | |
|---|---|
| Kapazität | 4,3 nF |
| Dielektrischer Verlustfaktor | 1,29 % |
| Isolationswiderstand (25ºC) | 1230 ΩF |
| Isolationswiderstand: (125ºC) | 136 ΩF |
| TCC(-55/+125ºC) | ± 14,1 % |

Nach der Anfertigung eines Schliffes durch eine Bruchfläche eines Kondensators wurde die Schichtdicke der Keramik sowie die Elektrodendicke vermessen:

| | |
|---|---|
| Schichtdicke der aktiven Keramiklage | 13 μm |
| Innenelektrodendicke | 0,9 μm. |

Dieses Beispiel zeigt, daß Keramikvielschichtkodensatoren mit Elektrodendicken unter 1 μm mit Hilfe von Resinatpasten hergestellt werden können.

2. Die folgenden Komponenten werden eingewogen und homogenisiert:

| | |
|---|---|
| 22,0 gr | Goldmercaptocarbonsäureester (43 % Au) |
| 27,5 gr | Palladiumsulforesinat (8,5 % Pd) |
| 2,0 gr | Rhodiumnaphthenat (5 % Rh) |
| 1,0 gr | Wismutresinat (7 % Bi$_2$O$_3$) |
| 1,0 gr | Chromresinat ( 3 % Cr$_2$O$_3$) |
| 0,5 gr | X7R-Keramikpulver AD 352 L (< 1 μm) |
| 23,0 gr | Kolophoniumharz |
| 23,0 gr | Pineöl |
| 100,0 gr | |

| | |
|---|---|
| Edelmetallanteil | 9,5 % Au, 2,3 % Pd, 0,1 % Rh |
| Gesamtedelmetallgehalt | 11,9 % |
| Verhältnis Edelmetall/ Keramik | 23,8 |
| Viskosität | 13 Pas (HAAKE RV 20) |
| Trocknungszeit | 1,5 Stunden (Trockengrad 1). |

Entsprechend dem in Beispiel 1 beschriebenen Verfahren werden mit dieser Resinatpaste Vielschichtkondensatoren der Größe 1206 mit einer aktiven Lage (entsprechend 2 Elektrodenschichten) gefertigt und elektrisch vermessen. Es ergaben sich folgende Ergebnisse (Mittelwerte):

| Kapazität | 4,1 nF |
|---|---|
| Dielektrischer Verlustfaktor | 1,23 % |
| Isolationswiderstand (25°C) | 1194 ΩF |
| (125°C) | 177 ΩF |
| TCC(-55°C/125°C) | ± 12,2 % |
| | |
| Schichtdicke der aktiven Keramiklage | 13 µm |
| Innenelektrodendicke | 0,8 µm. |

3. Folgende Komponenten werden eingewogen und auf einem Dreiwalzwerk homogenisiert:

| | |
|---|---|
| 36,5 gr | Silber-Neodecanoat (35 % Ag) |
| 35,0 gr | Palladiumsulforesinat (11 % Pd) |
| 11,4 gr | Palladiummercaptocarbonsäureester (17,2 % Pd) |
| 2,5 gr | Rhodiumresinat (5 % Rh) |
| 0,7 gr | Zirkonium-Resinat (18 % Zr) |
| 3,3 gr | Bariumtitanatpulver (<1 µm) |
| 10,6 gr | Terpineol |
| 100,0 gr | |

| Edelmetallanteil | 12,8 Ag, 5,5 % Pd, 0,1 % Rh |
|---|---|
| Gesamtedelmetallgehalt | 18,4 % |
| Verhältnis Ag/Pd | 70 : 30 |
| Verhältnis Edelmetall/ Keramik | 5,6 : 1 |
| Viskosität | 23 Pas (HAAKE RV 20) |
| Trocknungszeit | |
| (Trockengrad 1) | 1,5 Stunden. |

Diese Resinatpaste wird im "wet stack"-Verfahren auf eine Schicht aus dielektrischer Keramik des Typs X7R im Siebdruckverfahren aufgebracht. Nach dem Trocknen (1,5 Stunden bei Raumtemperatur) wird über die Resinatschicht eine Lage Keramik in Form einer Paste gedruckt. Anschließend trocknet man die Anordnung bei 80° C für 15 Minuten und druckt auf die getrocknete Keramikschicht eine weitere Lage Resinatpaste. Nach Trocknung der Resinatpaste werden 12 weitere Schichten Keramikpaste als Abdeckung gedruckt (jeweils von einem Trocknungsschritt unterbrochen).

Nach dem letzten Trockungsprozess werden die Teile vereinzelt und in einem mehrstufigen Brennprozess bei einer Temperatur von 1150° C mit 2 Stunden Haltezeit gebrannt. Nach dem Einbrand werden die Kondensatoren an den Kanten mit AgPd-Paste metallisiert und anschließend Anschlußbeinchen angelötet. Die elektrischen Werte der so hergestellten Kondensatoren sind nachfolgend zusammengestellt (Mittelwerte):

| Kapazität | 4,5 nF |
|---|---|
| Dielektrischer Verlustfaktor | 13,3 % |
| Isolationswiderstand (25°C) | 1450 ΩF |
| Isolationswiderstand (125°C) | 140 ΩF |
| TCC(-55/+125°C) | ± 13,5 %. |

**Patentansprüche**

1. Edelmetallhaltige Resinatpaste zur Herstellung von Innenelektroden für keramische Vielschichtkondensatoren, bestehend aus 10 bis 80 Gew.% Edelmetallresinaten, 1 bis 30 Gew.% Unedelmetallresinaten, 0 bis 30 Gew.% organischen Bindemitteln und 0 bis 30 Gew.% organischen Lösungsmitteln,
**dadurch gekennzeichnet,**

**daß** die Paste 0,5 bis 20 Gew.% dielektrisches Keramikpulver enthält, wobei das Gewichtsverhältnis Edelmetall zu Keramik zwischen 1:1 und 25:1 liegt, und die Paste eine Trocknungszeit von weniger als 4 Stunden bei Raumtemperatur aufweist.

2. Edelmetallhaltige Resinatpaste nach Anspruch 1,
   **dadurch gekennzeichnet,**
   **daß** als Edelmetalle Palladium, Silber und Gold in Form von Sulforesinaten, Alkylmercaptiden, Arylmercaptiden, Mercaptocarbonsäureestern oder schwefelfreien Carboxylaten eingesetzt werden.

3. Edelmetallhaltige Resinatpaste nach Anspruch 1 oder 2,
   **dadurch gekennzeichnet,**
   **daß** als Unedelmetalle Wismut, Chrom, Zirkonium, Cer, Zinn und Titan in Form schwefelfreier Carboxylate eingesetzt werden.

4. Edelmetallhaltige Resinatpaste nach Anspruch 1, 2 oder 3,
   **dadurch gekennzeichnet,**
   **daß** als dielektisches Keramikpulver Bariumtitanat, Strontiumtitanat und Kalziumtitanat verwendet wird.

**Claims**

1. A noble metal-containing resinate paste for preparing internal electrodes for ceramic multilayer capacitors, consisting of 10 to 80 wt.% noble metal resinate, 1 to 30 wt.% base metal resinate, 0 to 30 wt.% organic binders and 0 to 30 wt.% organic solvents,
   **characterised in that**
   the paste contains 0.5 to 20 wt.% of dielectric ceramic powder, wherein the ratio by weight of noble metal to ceramic is between 1:1 and 25:1 and the paste has a drying time of less than 4 hours at room temperature.

2. A noble metal-containing resinate paste according to Claim 1,
   **characterised in that**
   palladium, silver and gold in the form of sulfo resinates, alkyl mercaptides, aryl mercaptides, mercaptocarboxylates or sulfur-free carboxylates are used as noble metals.

3. A noble metal-containing resinate paste according to Claim 1 or 2,
   **characterised in that**
   bismuth, chromium, zirconium, cerium, tin and titanium in the form of sulfur-free carboxylates are used as base metals.

4. A noble metal-containing resinate paste according to Claim 1, 2 or 3
   **characterised in that**
   barium titanate, strontium titanate and calcium titanate are used as dielectric ceramic powders.

**Revendications**

1. Pâte résineuse contenant des métaux nobles pour la fabrication d'électrodes internes pour des condensateurs multicouches céramiques, composée de 10 à 80 % en poids de résines de métaux nobles, de 1 à 30 % en poids de résines de métaux non nobles, de 0 à 30 % en poids de liants organiques et de 0 à 30 % en poids de solvants organiques, **caractérisée en ce que** la pâte contient entre 0,5 et 20 % en poids de poudre céramique diélectrique la proportion en poids entre le métal noble et la céramique étant comprise entre 1/1 et 25/1, et **en ce que** la pâte présente un temps de séchage inférieur à 4 heures à température ambiante.

2. Pâte résineuse contenant des métaux nobles selon la revendication 1, **caractérisée en ce que** les métaux nobles employés sont le palladium, l'argent et l'or sous forme de résines sulfonées, d'alkyl-mercaptides, d'aryl-mercaptides, d'esters de mercaptide et d'acide carboxylique ou de carboxylates sans soufre.

3. Pâte résineuse contenant des métaux nobles selon l'une des revendications 1 ou 2, **caractérisée en ce que** les métaux non nobles employés sont le bismuth, le chrome, le zirconium, le cérium, l'étain et le titane sous forme de carboxylates sans soufre.

4. Pâte résineuse contenant des métaux nobles selon l'une des revendications 1, 2 ou 3, **caractérisée en ce que** la poudre de céramique diélectrique employée est du titanate de baryum, du titanate de strontium et du titanate de calcium.